# EUROPÄISCHE PATENTSCHRIFT

(11) **EP 3 205 637 B1**
(45) Veröffentlichungstag und Bekanntmachung des Hinweises auf die Patenterteilung: **24.04.2019**
(21) Anmeldenummer: 17155635.0
(22) Anmeldetag: 10.02.2017
(51) Int. Cl.: C05G 3/00, C05D 9/02

(54) **METALLNANOPARTIKELHALTIGES, WÄSSRIGES DÜNGEMITTEL**
AQUEOUS FERTILIZER CONTAINING METAL NANOPARTICLES
ENGRAIS AQUEUX CONTENANT DES NANOPARTICULES MÉTALLIQUES

(30) Priorität: 10.02.2016 DE 102016102307
(43) Veröffentlichungstag der Anmeldung: 16.08.2017
(73) Patentinhaber: Heinisch, Martin, 73630 Remshalden (DE); Buder, Elmar, 6890 Lustenau (AT)
(72) Erfinder: Heinisch, Martin, 73630 Remshalden (DE); Buder, Elmar, 6890 Lustenau (AT)
(74) Vertreter: Glück Kritzenberger Patentanwälte PartGmbB

(56) Entgegenhaltungen:
- WO-A1-03/059070
- WO-A1-2013/121244
- WO-A1-2014/087202
- US-A1- 2011 296 885
- RUIQIANG LIU ET AL: "Synthetic apatite nanoparticles as a phosphorus fertilizer for soybean (Glycine max)", SCIENTIFIC REPORTS, BIOSCIENCES INFORMATION SERVICE, PHILADELPHIA, PA, US, Bd. 4, Nr. 5686, 1. Juli 2014 (2014-07-01) , Seiten 1-6, XP002754416, ISSN: 2045-2322, DOI: 10.1038/SREP05686 [gefunden am 2014-07-14]
- CHIH-PING TSO ET AL: "Stability of metal oxide nanoparticles in aqueous solutions", WATER SCIENCE AND TECHNOLOGY, Bd. 61, Nr. 1, 1. Januar 2010 (2010-01-01) , Seite 127, XP055344403, ISSN: 0273-1223, DOI: 10.2166/wst.2010.787
- Y.S. EL-TEMSAH, E.J. JONER: "Impact of Fe and Ag nanoparticles on seed germination and differences in bioavailability during exposure in aqueous suspension and soil", ENVIRONMENTAL TOXICOLOGY, Bd. 27, Nr. 1, 26. Mai 2010 (2010-05-26), Seiten 42-49, XP002771318, DOI: 10.1002/tox.20610

## Beschreibung

### Technisches Gebiet

Die Erfindung betrifft das technische Gebiet der Düngemittel.

### Stand der Technik

Kormophyten (höhere Pflanzen) bedürfen für einen optimalen Wuchs neben Wasser, Kohlendioxid und Licht zusätzlich sogenannte Makronährstoffe wie Stickstoff, Schwefel, Phosphor, Kalium, Calcium und Magnesium in Mengen von ungefähr 0,2 bis 4,0% Trockensubstanz. Des Weiteren sind Spurenelemente wie Zink, Kupfer, Eisen, Molybdän, Bor, Mangan, Nickel, Selen oder Cobalt ebenfalls unerlässlich. Diese Erkenntnisse sind in derzeitigen Düngemittelprodukten überwiegend mit einbezogen (WO 2013/121244 A1). Mehrnährstoffdünger unterstützen die Pflanzenstärkung und beinhalten eine Reihe von Hauptnährstoffen, das heißt es handelt sich um Mischungen, die die für die Pflanze verfügbare Menge an Nährstoffen enthalten. In Volldüngern bzw. NPK-Düngern findet man Stickstoff (N), Phosphat (P) und Kalium (K). Die Mengen werden in Prozent angegeben. Die Bezeichnung (9/25/25) bedeutet beispielsweise, dass der Dünger 9% Stickstoff (N), 25% Phosphor (P₂O₅) und 25% Kalium (K₂O) beinhaltet.

Im Agrarbereich spielen Metallverbindungen in Dünge- und Spritzmittelprodukten im Getreide-, Gemüse- und Obstanbau eine wichtige Rolle. So tragen z.B. Kupfer- und Eisenverbindungen als Spurenelemente bei vielen Kulturen einen wichtigen Teil zum Pflanzenwachstum bei. Eisenprodukte, die zumeist in Form von Eisensulfat oder -chelaten eingesetzt werden, bewirken beispielsweise aufgrund einer Verbesserung des Chlorophyll-Haushalts ein sattes, dunkles Grün der Blätter, was wiederum zu einer verstärkten Photosyntheseleistung führt und mit einer Vergrößerung der Früchte einhergeht.

Neben seiner fungiziden und teilweise bakteriziden Wirkung wird Kupfer auch als Spurenelement zur Stärkung der Kormophyten verwendet. Hauptaufgabe des Kupfers im Stoffwechsel der Pflanze ist dessen enzymatische Wirkung bei diversen Oxidationsvorgängen. In der Pflanze findet man ungefähr 70% des gesamten Kupfers in den stoffwechselaktiven Blättern, was auf eine Beteiligung an der Photosynthese hinweist. Darüber hinaus ist Kupfer als Enzymbestandteil im Ligninstoffwechsel für die Stabilisierung der Zellwände mitverantwortlich und unterstützt außerdem die Bildung von Phytoalexin, einen Wuchsstoff, der das pathogene Pilzwachstum hemmt (www.tll.de/ainfo/pdf/cudu1105.pdf). Der positive Einfluss von Eisen und Kupfer auf den Stoffwechsel und damit auf das Wachstum von Pflanzen ist somit allgemein bekannt.

Gemäß EP 191 165 A2 wird Eisen in Form eines Mikropulvers (44-149 µm) in Düngemitteln verwendet. Versuche an Tomatenpflanzen in einem mit geringen Mengen eines Eisenpulver-Polystyrolschaum-Lavamehls durchsetzen Kulturboden zeigen einen höheren Wuchs, kräftigeren Stamm und satteres Grün im Vergleich zu unter Normalbedingungen aufgewachsenen Tomatenpflanzen.

Eine Reihe von Patenten beschreibt den Einsatz verschiedener Nanomaterialien wie Titandioxid, Zinkoxid und Kohlenstoff in Düngern (WO 2009/153231 A2, US 8 188 005 B2 und US 8 328 898 B2). Die Verwendung dieser Zusätze im Dünger führt zu einer Verbesserung des Pflanzenwachstums und einer erhöhten Ernteausbeute bei einer Reihe von untersuchten Pflanzen wie Tomaten, Sellerie, Auberginen aber auch Reis oder Weizen.

In WO 2013/121244 A1 wird die Herstellung von mit Pflanzennährstoff beschichteten Metallnanopartikeln und deren Aufbringung auf die Pflanze mit Hilfe eines Nanodünger-Kits bestehend aus Metallsalz, Pflanzennährstoff und Reduktionsmittel offenbart.

Probleme beim Einsatz von beispielsweise Eisen in Düngern bereitet die Tatsache, dass einerseits ein Eisen-Mangel zu Ernteausfällen führt, andererseits aber die phytotoxische Wirkung von Eisen eine Verbrennung der Blätter der Pflanze bewirken kann. Die Düngung mit Kupfer ist mit dem Nachteil verbunden, dass 90% des Kupfers von der Pflanze nicht aufgenommen werden. Alle erhältlichen Produkte, die teilweise keine oder eine nicht ausreichende Wirkung zeigen, sind abhängig vom pH-Wert des Bodens. Eine Bewässerung mit Eisen-Chelaten ist beispielsweise nur bis pH10 möglich. Des Weiteren sind Blattspritzungen mit Eisen-Chelaten nicht durchführbar. Auch bevorzugen viele Landwirte Flüssigdünger, was ein weiterer Nachteil vieler bisher auf dem Markt erhältlicher Eisendünger ist. Ein weiterer Nachteil ergibt sich aus der sowohl deutschland- als auch europaweiten Bestrebung, die Kupfermengen bei der Düngung von Pflanzen zu verringern, weswegen Verfahren zur Kupfer-Reduzierung wünschenswert sind.

Gerade im Biolandbau ist elementares Kupfer in vielen Anwendungsbereichen die einzige Alternative, da pro Jahr bis zu 12 kg elementares Kupfer pro Hektar ausgebracht wird, was zur Verseuchung von Boden und Grundwasser führt. Das Ziel im Ökolandbau ist es, die Mengen an kupferhaltigen Düngemitteln in den nächsten zehn bis fünfzehn Jahren zu optimieren und zu minimieren, da im Moment eine starke Immission ins Erdreich und ins Grundwasser vorhanden ist (http://kupfer.jki.bund.de). In den vergangenen Jahren wurden intensive Bemühungen zur Optimierung von Kupferpräparaten unternommen. Dabei wurde festgestellt, dass es für Kupfer in vielen Anwendungsgebieten keine ausreichend wirksame Alternative gibt. Der Verzicht auf Kupferpräparate hätte beispielsweise im Öko-Weinbau Ertrags- und Qualitätsausfälle von 50 bis 100% zur Folge.

Trotz der aus dem Stand der Technik bekannten Düngemittel bleiben eine weitere Verbesserung des Pflanzenwachstums sowie eine Verringerung der Menge an mit dem Düngemittel ausgebrachten Metallen zentrale Ziele der Forschung und Entwicklung auf dem technischen Gebiet der Düngemittel.

### Darstellung der Erfindung

Aufgabe der vorliegenden Erfindung ist es daher, ein Düngemittel zur Verfügung zu stellen, das zu einem verbesserten Pflanzenwachstum führt und das die Menge an mit dem Düngemittel ausgebrachten Metallen reduziert. Diese Aufgabe wird erfindungsgemäß durch das Düngemittel gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Beispielen.

Die vorliegende Erfindung stellt ein metallnanopartikelhaltiges, wässriges Düngemittel zur Verfügung. Das Düngemittel enthält zumindest zwei Arten von Metallnanopartikel, wobei die Metallnanopartikel eine Partikelgröße von 0,1 nm bis 10.000 nm aufweisen, und wobei die Metallnanopartikel, bezogen auf das Gewicht des gesamten wässrigen Düngemittels, in einem Anteil von 0,1 Gew.% bis 20 Gew.% in dem wässrigen Düngemittel enthalten sind. Das wässrige Düngemittel enthält, bezogen auf das Gewicht des gesamten wässrigen Düngemittels, Kupfernanopartikel in einem Anteil von 2 Gew.% bis 4 Gew.% und Silbernanopartikel in einem Anteil von 0,001 Gew.% bis 0,1 Gew.%.

Einer allgemeinen Definition folgend ist "Nanopartikel" eigentlich eine Bezeichnung für Partikel, die eine Größe im Bereich kleiner als 100 nm aufweisen. Die Verwendung der Vorsilbe "Nano" stellt gemäß dieser offiziellen Definition (ISO TC 229), eine Abgrenzung zu Partikel im Sub-Mikrometer Bereich (> 100 nm) dar. Mit den im vorliegenden Text synonym verwendeten Begriffen "Metallnanopartikel", "metallische Nanopartikel", "Nanometalle" und "nanopartikuläres Material" werden im Gegensatz zu dieser gängigen Definition aber Partikel bezeichnet, die eine Korngröße von 0,1 bis 10.000 nm aufweisen. Bei den angegebenen Werten der Partikelgröße oder Korngröße handelt es sich um mittels dynamischer Lichtstreuung ermittelte Partikel- bzw. Korngrößenverteilungen. Mit einer bestimmten Partikelgröße werden Partikelgemische bezeichnet, in denen ein Anteil von 90 % der Partikel kleiner sind als der jeweils angebene Zahlenwert (D90).

Fehlt der Präfix "Nano" in dem vorliegenden Text, so ist immer das elementare Metall oder eine Metallverbindung (Salz bzw. Komplex des Metalls) gemeint.

Die Begriffe "Dünger", "Düngemittel", "Düngemittelrezeptur", "Düngerrezeptur", "Düngemittelformulierung" und "Düngerformulierung" werden im vorliegenden Text synonym verwendet.

Bei Verwendung des erfindungsgemäßen Düngemittels wird eine signifikante Verbesserung der Aufnahmefähigkeit der Metalle in die Pflanze festgestellt und eine damit verbundene deutlich verbesserte Düngerwirksamkeit. Dadurch wird der Bedarf der Pflanzen schneller und nachhaltiger befriedigt. Dies hat eine geringere Einsatzmenge der Spurenelemente pro Fläche zur Folge, wodurch die Aufwandmengen an Metallen deutlich reduziert werden.

Ein weiterer Vorteil der erfindungsgemäßen Düngemittel ist die fungizide und bakterizide Wirkung der in den Düngern enthaltenen Nanometalle bei gleichzeitiger deutlich reduzierter Belastung von Erdreich und Wasserhaushalt.

Ein weiterer Vorteil ergibt sich durch die vom pH-Wert des Bodens unabhängige Ausbringung des erfindungsgemäßen Düngers, wodurch das mit aus dem Stand der Technik bekannten Produkten verbundene Problem der vom pH-Wert des Bodens abhängigen Ausbringung überwunden wird.

Aufgrund der Tatsache, dass die in dem erfindungsgemäßen Düngemittel enthaltenen Metallnanopartikel stabil in wässriger Lösung vorliegen, sind diese für die Ausbringung in der Landwirtschaft sehr gut geeignet. Die in der vorliegenden Erfindung beschriebenen Düngemittel können also in Verdünnung mit Trink- oder Brauchwasser durch verschiedene Applikationsarten wie Blattspritzung, mit Gießwagen oder verschiedene Bewässerungssysteme wie beispielsweise Fontänenbewässerung oder Tropfbewässerung ausgebracht werden.

Die erfindungsgemäßen Düngemittel bewirken zudem eine deutliche Schonung der Rohstoff-Ressourcen. Die Ausbringung von elementarem Eisen ist durch den Einsatz von Nanoeisen zehnmal geringer als bei herkömmlichen Eisendüngern, wodurch der Bedarf an der Ressource Eisen um den Faktor 10 sinkt. Bei Verwendung von Nanokupfer ist der Bedarf an der Ressource Kupfer im Vergleich zu herkömmlichen Kupferdüngern sogar um den Faktor 30 niedriger. Damit wird insgesamt der Einsatz dieser Metalle in der Landwirtschaft reduziert, was positive Auswirkungen auf die Umwelt hat. Die Immission ins Grundwasser und ins Erdreich ist beim Einsatz von Nanokupfer um das 30-fache und bei der Verwendung von Nanoeisen um das 10-fache niedriger als bei bisher erhältlichen Eisen- oder Kupfer-Düngern.

Die deutliche Reduktion der ausgetragenen Mengen besonders an kupferhaltigen Stoffen erfüllt die derzeitigen Bestrebungen, die Aufwandmengen einzudämmen. Ein Rückgang des ökologischen Landbaus durch den Verzicht auf kupferhaltige Präparate kann dadurch verhindert werden.

Zur Herstellung der wässrigen Düngerformulierungen kann entionisiertes, ein- oder mehrfach destilliertes Wasser oder Osmosewasser verwendet werden. Ebenso kann nach Grander vitalisertes Osmosewasser verwendet werden. Die Produktion von Grander-Wasser erfolgt mit einem Wasserbelebungsgerät, bestehend aus Kammern, die Wasser mit hoher Ordnung und Stabilität, sogenanntes Informationswasser enthalten. Die positiven Eigenschaften des Grander-Wassers werden beim Durchfließen der Kammern auf das herkömmliche durch Umkehrosmose erhaltene Osmosewasser übertragen.

Die vorliegende Erfindung beschreibt wässrige Formulierungen für die Pflanzenernährung und -stärkung. Die Erfinder haben überraschenderweise festgestellt, dass ein alleiniger Einsatz einer wässrigen Lösung an Nanometall bei Ausbringung auf die Pflanzen bereits zu einem positiven Ergebnis beim Wachstum führt. In der vorliegenden Erfindung liegt die Konzentration an Nanometall in der Düngerformulierung bei 0,1 bis 20 Gew.%, bevorzugt 0,1 bis 5 Gew.%, besonders bevorzugt 0,1 bis 3 Gew.%. Gemäß einer bevorzugten Ausführungsform der vorliegenden Erfindung sind die Metallnanopartikel daher, bezogen auf das Gewicht des gesamten wässrigen Düngemittels, in einem Anteil von 0,1 Gew.% bis 5 Gew.%, bevorzugt in einem Anteil von 0,1 Gew.% bis 3 Gew.% in dem Düngemittel enthalten. Bereits bei den genannten geringen Anteilen an Metallnanopartikel wird ein stark verbessertes Pflanzenwachstum beobachtet, wobei gleichzeitig nur ein geringer Resourcenverbrauch an Metall und eine nur geringe Umweltbelastung erfolgen.

Gemäß einer weiteren bevorzugten Ausführungsform weisen die Metallnanopartikel eine Partikelgröße von 0,1 nm bis 1.000 nm, bevorzugt eine Partikelgröße von 0,1 nm bis 100 nm auf. Mit abnehmender Partikelgröße kann eine zunehmend verbesserte Düngewirkung pro Menge an Metall festgestellt werden.

Die bereits genannten Vorteile des erfindungsgemäßen Düngemittels, nämlich ein stark verbessertes Pflanzenwachstum bei gleichzeitig nur geringem Resourcenverbrauch an Metall und nur geringer Umweltbelastung zeigen sich besonders intensiv, wenn neben den in dem metallnanopartikelhaltigen, wässrigen Düngemittel enthaltenen Kupfernanopartikel und Silbernanopartikel ein oder mehrere weitere Arten von Metallnanopartikel ausgewählt sind aus der Gruppe bestehend aus Eisennanopartikel, Zinknanopartikel, Siliziumnanopartikel, Mangannanopartikel, Molybdännanopartikel, Calciumnanopartikel und Magnesiumnanopartikel enthalten sind.

Erfindungsgemäß ist in dem Düngemittel ein Anteil an Kupfernanopartikel enthalten. Ein besonderer Vorteil liegt in der fungiziden und bakteriziden Wirkung der in dem Düngern enthaltenen Nanokupferpartikel bei gleichzeitiger deutlich reduzierter Belastung von Erdreich und Wasserhaushalt. Schon bei geringen Aufwandmengen eines Nanokupferdüngers ergibt sich eine sehr gute fungizide Wirkung, die sich an einer Reihe verschiedener Pilze wie Sclerotinia, Alternaria, Peronospora, Phytophtora, Botrytis, Cladiospora, Rhizoctonia zeigt. Auch die bakterizide Wirkung des Nanokupferdüngers gegen Pseudomonas syringae, Xanthomonas c.c., Clavibacter m.m., Agrobacterium vitis, Agrobacterium tumefaciens, Xylella fastidiosa ist zu nennen.

In diesem Text wird mit dem Begriff Nanometalldünger eine Düngemittelformulierung bezeichnet, die in einer wässrigen Lösung 2 bis 3 Gew.% an Nanometall aufweist. Mit dem Begriff NK-Nanometalldünger werden Düngemittelformulierungen zusammengefasst, die zusätzlich zum Nanometall weitere Komponenten wie beispielsweise Ammonium- oder Kaliumsalze enthalten.

Formulierungen mit einer erhöhten Konzentration an Nanometall zeigen besonders positive Effekte. Diese Formulierungen werden unter dem Begriff Konzentrat-Nanometalldünger zusammengefasst. Die Konzentration an Metallnanopartikel liegt in diesen Formulierungen bei 3 bis 20 Gew.%, bevorzugt bei 3 bis 5 Gew.%. Synonym verwendet werden die Bezeichnungen "Nanometalldünger", "NK-Nanometalldünger", "Konzentrat-Nanometalldünger" und "Nanodünger". Bevorzugt sind daher die Metallnanopartikel, bezogen auf das Gewicht des gesamten wässrigen Düngemittels, in einem Anteil von 3 Gew.% bis 20 Gew.%, besonders bevorzugt in einem Anteil von 3 Gew.% bis 5 Gew.% in dem Düngemittel enthalten.

Gemäß besonders bevorzugten Ausführungsformen sind neben den Metallnanopartikeln in dem wässrigen Düngemittel zusätzlich ein Anteil an Kalium und ein Anteil an Stickstoff vorgesehen. Besonders bevorzugt enthält das wässrige Düngemittel, bezogen auf das Gewicht des gesamten wässrigen Düngemittels, Kalium in Form von K₂O in einem Anteil von 4 Gew.% bis 15 Gew.% und Stickstoff in einem Anteil von 6 Gew.% bis 10 Gew.%.

Gemäß besonders bevorzugten Ausführungsformen enthalten diese sogenannten NK-Nanometalldünger 2 Gew.% bis 3 Gew.% Nanometall, 6 Gew.% bis 10 Gew.% Stickstoff (Mengenangabe als elementarer N) und 4 Gew.% bis 15 Gew.% Kalium (Mengenangabe in Form von K₂O). Insbesondere bevorzugt ist zusätzlich ein weiteres Nanometall in einem Anteil von 0,1 Gew.% bis 1 Gew.% enthalten.

Zudem wurde überraschenderweise gefunden, dass eine Kombination verschiedener Nanometalle zu einem besonders positiven Effekt auf das Pflanzenwachstum führt. Überraschend sind dabei die unerwarteten synergistischen Effekte auf das Pflanzenwachstum und die chemische Stabilität der gemeinsam vorliegenden edlen und unedlen Metalle. Es wird eine im Vergleich zu bekannten Düngern deutlich verbesserte Assimilierung der unterschiedlichen Nanometalle durch die Pflanze festgestellt.

Besonders ausgeprägte Effekte im Hinblick auf ein verbessertes Pflanzenwachstum bei gleichzeitig nur geringen Mengen an ausgetragenem Metall ergeben sich für die folgenden, bevorzugten Kombinationen von Metallnanopartikelarten in den angegebenen, besonders bevorzugten Mengenbereichen:
- Metallnanopartikelhaltiges, wässriges Düngemittel, wobei zusätzlich Eisennanopartikel enthalten sind.
- Sind in dem Düngemittel Eisennanopartikel vorgesehen, so enthält das wässrige Düngemittel gemäß einer besonders bevorzugten Ausführungsform, bezogen auf das Gewicht des gesamten wässrigen Düngemittels, Eisennanopartikel in einem Anteil von 0,1 Gew.% bis 4 Gew.%, insbesondere bevorzugt in einem Anteil von 1 Gew.% bis 3 Gew.%, und ganz besonders bevorzugt in einem Anteil von rund 2 Gew.%.
- Das wässrige Düngemittel enthält gemäß einer besonders bevorzugten Ausführungsform, bezogen auf das Gewicht des gesamten wässrigen Düngemittels, Kupfernanopartikel in einem Anteil von rund 3 Gew.%.
- Das wässrige Düngemittel enthält gemäß einer besonders bevorzugten Ausführungsform, bezogen auf das Gewicht des gesamten wässrigen Düngemittels, Silbernanopartikel in einem Anteil von rund 0,01 Gew.%.
- Metallnanopartikelhaltiges, wässriges Düngemittel, wobei das wässrige Düngemittel Eisennanopartikel, Kupfernanopartikel und Silbernanopartikel enthält.
- Sind in dem Düngemittel Eisennanopartikel, Kupfernanopartikel und Silbernanopartikel vorgesehen, so enthält das wässrige Düngemittel gemäß einer bevorzugten Ausführungsform, bezogen auf das Gewicht des gesamten wässrigen Düngemittels, Eisennanopartikel in einem Anteil von 1 Gew.% bis 3 Gew.%, besonders bevorzugt in einem Anteil von rund 2 Gew.%, Kupfernanopartikel in einem Anteil von 2 Gew.% bis 4 Gew.%, insbesondere bevorzugt in einem Anteil von 0,0001 Gew.% bis 1 Gew.%, insbesondere bevorzugt in einem Anteil von 0,001 Gew.% bis 0,1 Gew.%, ganz besonders bevorzugt in einem Anteil von rund 0,01 Gew.%.
- Metallnanopartikelhaltiges, wässriges Düngemittel, wobei das wässrige Düngemittel Kupfernanopartikel und Eisennanopartikel enthält.
- Sind in dem Düngemittel Kupfernanopartikel und Eisennanopartikel vorgesehen, so enthält das wässrige Düngemittel gemäß einer besonders bevorzugten Ausführungsform, bezogen auf das Gewicht des gesamten wässrigen Düngemittels, Kupfernanopartikel in einem Anteil in einem Anteil von 2 Gew.% bis 4 Gew.%, bevorzugt in einem Anteil von rund 3 Gew.%, und Eisennanopartikel in einem Anteil von 1 Gew.% bis 3 Gew.%, bevorzugt in einem Anteil von rund 2 Gew.%.
- Metallnanopartikelhaltiges, wässriges Düngemittel, wobei das wässrige Düngemittel Kupfernanopartikel und Silbernanopartikel enthält.
- Sind in dem Düngemittel Kupfernanopartikel und Silbernanopartikel vorgesehen, so enthält das wässrige Düngemittel gemäß einer bevorzugten Ausführungsform, bezogen auf das Gewicht des gesamten wässrigen Düngemittels, Kupfernanopartikel in einem Anteil von 2 Gew.% bis 4 Gew.%, besonders bevorzugt in einem Anteil von rund 3 Gew.%, und Silbernanopartikel in einem Anteil von 0,001 Gew.% bis 0,1 Gew.%, insbesondere bevorzugt in einem Anteil von rund 0,01 Gew.%.
- Metallnanopartikelhaltiges, wässriges Düngemittel, wobei das wässrige Düngemittel Eisennanopartikel und Silbernanopartikel enthält.
- Sind in dem Düngemittel Eisennanopartikel und Silbernanopartikel vorgesehen, so enthält das wässrige Düngemittel gemäß einer bevorzugten Ausführungsform, bezogen auf das Gewicht des gesamten wässrigen Düngemittels, Eisennanopartikel in einem Anteil von 1 Gew.% bis 3 Gew.%, besonders bevorzugt in einem Anteil von rund 2 Gew.%, und Silbernanopartikel in einem Anteil von 0,001 Gew.% bis 0,1 Gew.%, insbesondere bevorzugt in einem Anteil von rund 0,01 Gew.%.
- Metallnanopartikelhaltiges, wässriges Düngemittel, wobei das wässrige Düngemittel Eisennanopartikel, Kupfernanopartikel und Silbernanopartikel enthält.
- Sind in dem Düngemittel Eisennanopartikel, Kupfernanopartikel und Silbernanopartikel vorgesehen, so enthält das wässrige Düngemittel gemäß einer bevorzugten Ausführungsform, bezogen auf das Gewicht des gesamten wässrigen Düngemittels, Eisennanopartikel in einem Anteil von 1 Gew.% bis 3 Gew.%, besonders bevorzugt in einem Anteil von rund 2 Gew.%, Kupfernanopartikel in einem Anteil von 2 Gew.% bis 4 Gew.%, insbesondere bevorzugt in einem Anteil von rund 3 Gew.%, und Silbernanopartikel in einem Anteil von 0,001 Gew.% bis 0,1 Gew.%, ganz besonders bevorzugt in einem Anteil von rund 0,01 Gew.%.

Die vorliegende Erfindung umfasst auch Verfahren zum Ausbringen der oben beschriebenen metallnanopartikelhaltigen, wässrigen Düngemittel, wobei das Ausbringen durch Blattspritzung, Fontänenbewässerung, Tropfbewässerung oder mit Gießwagen erfolgt. Üblicherweise wird das Düngemittel vor dem Ausbringen mit Wasser auf die gewünschte Konzentration verdünnt.

Die vorliegende Erfindung umfasst außerdem die Verwendung der oben beschriebenen metallnanopartikelhaltigen, wässrigen Düngemittel zur Düngung von Tomaten-Pflanzen, Clementinen-Pflanzen, Himbeer-Pflanzen, Citrusfrucht-Pflanzen, Kernobst-Pflanzen, Steinobst-Pflanzen, Mango-Pflanzen, Guava-Pflanzen, Erdbeer-Pflanzen, Auberginen-Pflanzen, Kartoffel-Pflanzen, Hülsenfrucht-Pflanzen, Kohlgewächsen, Salat-Pflanzen, Getreide, Liliengewächsen, Rasen, Rosen, Schnittblumen, Gurken, Zucchini.

Die Vorzüge der Erfindung werden durch die nachfolgenden Ausführungsbeispiele verdeutlicht. Es versteht sich von selbst, dass die Erfindung nicht auf die Ausführungsbeispiele beschränkt ist.

### Wege zur Ausführung der Erfindung

Die in den folgenden Beispielen verwendeten Nanometall-Dispersionen stammen von der Firma ras materials GmbH, Regensburg. Die verwendeten Nanometalle weisen folgende Größenverteilung auf: Nanokupfer 0,1-10.000 nm, Nanoeisen 10-10.000 nm und Nanosilber 10-20 nm.

### Beispiel 1:

### Untersuchung der Mischbarkeit verschiedener Nano-Metall-Dispersionen

Um für die Ausbringung in der Landwirtschaft besonders gut geeignet zu sein, müssen die Nanometalle in wässriger Lösung vorliegen. Die Nanometalle sollen dabei sowohl einzeln als auch in Kombination eine stabile Dispersion bilden. Die Kompatibilität und Stabilität wurde in Beispiel 1 untersucht.

Um die Kompatibilität verschiedener Nanometalle zu prüfen, werden verschiedene Mischungen an Nanometall-Dispersionen hergestellt. Mischung 1 besteht aus 3 Gew.% Nanokupfer und 2 Gew.% Nanoeisen, Mischung 2 aus 3 Gew.% Nanokupfer und 0,01 Gew.% Nanosilber und Mischung 3 aus 3 Gew.% Nanokupfer, 2 Gew.% Nanoeisen und 0,01 Gew.% Nanosilber. Die Mischungen resultieren alle in einer dunkelbraunen Lösung, bei der nach einiger Zeit ein leichtes, sehr feines Sediment auftritt, welches aufgeschüttelt werden kann. UV/VIS-Spektren nach einmonatigem Stehenlassen zeigen im Vergleich zu direkt nach der Herstellung aufgenommenen Spektren keinerlei Veränderung.

Mischungen in dem genannten Konzentrationsbereich sind somit kompatibel.

### Beispiel 2 (Nicht erfindungsgemäß)

### Untersuchung der Mischbarkeit von Nano-Eisen und Düngemittelformulierungen

Neben der Herstellung von stabilen Lösungen durch Kombination verschiedener Nanometalle darf auch die Beimischung von zusätzlichen Stoffen um beispielsweise NK-Nanometalldünger zu erhalten, kein Problem in der Stabilität der Nanodünger darstellen. Im Vordergrund steht die Einbringung einer wässrigen Nanoeisen-Dispersion in verschiedene Düngemittelformulierungen um Aufschluss über die Kompatibilität der einzelnen Komponenten zu erhalten. Ein Zweinährstoffdünger Stickstoffkali wird durch Mischen von Ammoniumnitrat und Kaliumnitrat in Wasser mit verschiedenen NK-Anteilen hergestellt. Es werden die Düngemittelformulierungen (6/4) und (3,5/7,5) untersucht. Die Angabe (6/4) bzw. (3,5/7,5) bedeutet, dass der Dünger 6 Gew.% Stickstoff (N) und 4 Gew.% Kali (K₂O) bzw. 3,5 Gew.% Stickstoff (N) und 7,5 Gew.% Kali (K₂O) beinhaltet.

Zu diesen Lösungen wird Nanoeisen-Dispersion zugegeben, so dass insgesamt 2 Gew.% Nanoeisen in der Formulierung vorhanden ist. Es ergibt sich jeweils eine dunkelbraune Lösung mit einem pH-Wert von 7,5. Bei der Probe mit NK (3,5/7,5) ist nach kurzer Zeit eine Kristallbildung am Boden zu beobachten, wohingegen die Probe (6/4) auch über einen längeren Zeitraum stabil bleibt. Leichte Bildung eines feinen Sediments ist nach einer gewissen Zeit zu sehen, welches allerdings problemlos aufgeschüttelt und redispergiert werden kann.

### Beispiel 3 (Nicht erfindungsgemäß)

### Gleichzeitiger Einsatz von Nano-Silber und Nano-Eisen in Düngemitteln

In diesem Beispiel wird die gleichzeitige Verwendung von Eisen- und Silber-Nanopartikeln in einer Düngemittelformulierung untersucht. Dazu wird in einen NK-Dünger (6/4) 2 Gew.% Nanoeisen und 0,01 Gew.% Nanosilber zugesetzt und sowohl auf Kompatibilität als auch Stabilität geprüft. Dabei ergibt sich, dass nach 3 Monaten noch keine Veränderung der Lösung zu beobachten ist. Die Bestimmung des Ag-Gehalts mittels UV/VIS-Spektroskopie bestätigt dies ebenfalls, was darauf schließen lässt, dass Nano-Eisen und Nano-Silber in diesem Konzentrationsbereich kompatibel ist.

Insgesamt kann also festgestellt werden, dass stabile Nanodünger möglich sind, die auf der einen Seite verschiedene Nanometalle und auf der anderen Seite Zusatzstoffe wie Ammonium- und Kaliumsalze enthalten können.

In den nachfolgenden Beispielen wird die Konzentration der Nanometalle in Verdünnung in ppm angegeben, was einer Konzentration von 1 mg/kg bzw. 1 mg/L entspricht.

### Beispiel 4 (Nicht erfindungsgemäß)

### Versuchsreihe mit Nanoeisendünger an Tomaten-Pflanzen

Ein Versuchsfeld mit einer Größe von 1,2 Hektar und einer Bodenqualität von 44 Bodenpunkten wird in zwei Versuchsfelder à 0,6 Hektar geteilt. Bei der Bezeichnung "Bodenpunkte" handelt es sich um einen Index für die Qualität einer Ackerfläche. Das Kontrollfeld wird täglich mit 300 mL eines handelsüblichen Eisenprodukts (Sequestrene) mit einer Konzentration von 5 Gew.% an Eisen behandelt, die andere Hälfte täglich mit je 20 mL Nanoeisen-Dünger mit einer Konzentration von 2 Gew.% an Nanoeisen bewässert. Dabei werden die jeweiligen Volumina der Düngemittel in jeweils 10.000 L Gießwasser hinzugefügt, wodurch sich eine Eisen-Ausbringkonzentration von 1,5 ppm beim handelsüblichen Dünger bzw. 0,04 ppm beim Nanoeisendünger ergibt. Nach 14 Tagen hat sich auf dem Kontrollfeld ein Eisenmangel an den Tomatenpflanzen eingestellt, welcher sich durch Chlorose, einer Gelbfärbung der Blätter, bemerkbar macht. Im Gegensatz dazu war auf der mit Nanoeisendünger behandelten Fläche keine Chlorose vorhanden, was dafür spricht, dass die Versorgung der Pflanze mit Eisen optimal erfüllt ist.

### Beispiel 5 (Nicht erfindungsgemäß)

### Versuchsreihe mit Nanoeisendünger an Clementinen-Pflanzen

Ein Versuchsfeld mit einer Größe von 1,0 Hektar wird in zwei Versuchsfelder à 0,5 Hektar geteilt. Das Kontrollfeld wird dreimal täglich mit 300 mL eines handelsüblichen Eisenchelat-Produkts mit einer Konzentration von 5 Gew.%, die andere Hälfte zweimal täglich mit je 600 mL Nanoeisendünger mit einer Konzentration von 2 Gew.% an Nanoeisen über Blattspritzung behandelt. Dazu wurden die entsprechenden Volumina der Dünger jeweils in 1.000 L Gießwasser dosiert, wodurch sich insgesamt eine Eisen-Ausbringkonzentration von 45 ppm beim handeslüblichen Produkt bzw. 24 ppm beim Nanoeisendünger pro Tag ergibt. Auf der Versuchsfläche, die dreimal pro Tag mit dem klassischen Eisenprodukt behandelt wurde, zeigt sich nach vier Wochen keine Chlorose mehr. Bei dem mit dem Nanoeisendünger zweimal pro Tag bespritzten Versuchsfeld ist die Chlorose bereits nach zwei Wochen verschwunden. Auf beiden Versuchsfeldern sind die Früchte gut ausgebildet und verkaufbar. Im Vergleich zum Kontrollfeld haben die mit Nanoeisendünger behandelten Früchte bei der Ernte einen um 1,5 Punkte höheren BRIX, ein Maß für den Zuckergehalt. Zusammengefasst bedeutet dies, dass die Chlorose bei fast 50% geringerer Ausbringung der Menge an Nanoeisen im Vergleich zum üblichen Eisendünger innerhalb der Hälfte der Zeit verschwunden ist.

### Beispiel 6 (Nicht erfindungsgemäß)

### Versuchsreihe mit Nanoeisendünger an Himbeer-Pflanzen

Ein Versuchsfeld der Größe 4,0 Hektar wird in zwei Versuchsfelder à 2,0 Hektar geteilt. Das Kontrollfeld wird täglich mit 300 mL eines handelsüblichen Eisenchelat-Düngers mit einer Konzentration von 5 Gew.% behandelt, die andere Hälfte täglich mit je 20 mL Nanoeisen-Dünger mit einer Konzentration von 2 Gew.% an Nanoeisen bewässert. Dabei werden die jeweiligen Volumina der Düngemittel in jeweils 10.000 L Gießwasser gegeben, was in einer Eisen-Ausbringkonzentration von 1,5 ppm beim handelsüblichen Dünger bzw. 0,04 ppm beim Nanoeisendünger resultiert. Nach vier Monaten zeigen die mit Nanoeisen behandelten Himbeerstauden mehr starke Seitenzweige und ein dunkleres Blattwerk als die Kontrollkultur. Die Wochenernte liegt mit 720 kg deutlich höher gegenüber 590 kg bei der mit dem herkömmlichen Eisen-Produkt behandelten Fläche, was eine Steigerung der Ernte um 22 % bedeutet bei einer 40-fach geringeren Ausbringung an Eisen.

Die Beispiele 4-6 zeigen deutlich die positiven Erfolge bei der Verwendung eines Nanometalldüngers im Vergleich zu herkömmlichen, Metall enthaltenden Düngerprodukten. Vor allem die Reduzierung bzw. die Vermeidung der Bildung von Chlorose hat einen starken Einfluss auf das Wachstum und die Qualität der Früchte. Eine deutliche Steigerung der Ernte bei gleichzeitiger Erniedrigung der ausgebrachten Menge an Metallen führen zu Einsparungen einerseits und zu einem positiven Effekt auf die Umwelt durch Reduzierung der Immission von Metallen ins Grundwasser und ins Erdreich andererseits.

### Beispiel 7 (Nicht erfindungsgemäß)

Je nach Pflanzenart und verwendetem Nanometall ergeben sich für die Düngung unterschiedliche Einsatzkonzentrationen an Nanodünger sowie verschiedene Applikationsarten. Dabei verdünnt der Landwirt ein entsprechendes pro Hektar nötiges Volumen mit Trink- oder Brauchwasser und bringt dieses auf dem Feld oder im Gewächshaus aus.

Die Einsatzmengen an Nanokupferdünger mit einer Konzentration von 3 Gew.% (30.000 ppm) an Nanokupfer und die Ausbringkonzentrationen für verschiedene Pflanzenkulturen, entsprechende Behandlungszeitpunkte und -häufigkeit sowie die jeweilige Applikationsart sind in der folgenden Tabelle angegeben:

| Anbauart | Pflanzenkultur | Volumen Dünger [mL/ha] | Menge Kupfer [g/ha] | Nanokupfer-Ausbringkonzentration [ppm] | Behandlung | Applikationsart |
|---|---|---|---|---|---|---|
| Freiland | Citrusfrüchte | 100 | 3,3 | 3,0 | 2 mal pro Jahr | Blattspritzung |
| | Kernobst | | | | | |
| | Steinobst | | | | | |
| | Mango, Guava | | | | | |
| | Erdbeeren | 100 | 3,3 | 3,0 | alle 2 Wochen | Blattspritzung |
| | Himbeeren | | | | | |
| | weitere Beeren | | | | | |
| | Auberginen | 20 | 0,7 | 0,1 | 1 mal pro Tag | Bewässerung |
| | Kartoffeln | 50 | 1,7 | 1,5 | 2 mal pro Jahr | Blattspritzung |
| | Hülsenfrüchtler | | | | | |
| | Kohlgewächse | 50 | 1,7 | 1,5 | 1 mal bei 3-BlattStadium | |
| | Salat | | | | | |
| | Getreide | 50 | 1,7 | 1,5 | bei Pflanzenhöhe 15 cm | |
| | Liliengewächse | | | | | |
| | Rasen | 300 | 9,9 | 9,0 | alle 4 Wochen | |
| | Rosen | 10 | 0,3 | 0,03 | 1 mal pro Tag | Bewässerung |
| | Schnittblumen | 100 | 3,3 | 3,0 | 2 mal pro Jahr | Blattspritzung |
| Gewächshaus | Erdbeeren | 20 | 0,7 | 0,1 | 1 mal pro Tag | Bewässerung |
| | Himbeeren | | | | | |
| | Gurken | | | | | |
| | Tomaten | | | | | |
| | Zucchini | | | | | |

Die Einsatzmengen an Nanoeisendünger mit einer Konzentration von 2 Gew.% (20.000 ppm) an Nanoeisen und die Ausbringkonzentrationen für verschiedene Pflanzenkulturen, entsprechende Behandlungszeitpunkte und -häufigkeit sowie die jeweilige Applikationsart sind in der nachstehenden Tabelle angegeben:

| Anbauart | Pflanzenkultur | Volumen Dünger [mL/ha] | Menge Eisen [g/ha] | Nanoeisen-Ausbringkonzentration [ppm] | Behandlung | Applikationsart |
|---|---|---|---|---|---|---|
| | Citrusfrüchte | 600 | 13,5 | 12,0 | 2 mal pro Jahr | Blattspritzung |
| | Kernobst | | | | | |
| | Steinobst | | | | | |
| | Mango, Guava | | | | | |
| | Erdbeeren | 300 | 6,8 | 6,0 | alle 2 Wochen | Blattspritzung |
| | Himbeeren | | | | | |
| | weitere Beeren | | | | | |
| | Auberginen | 20 | 0,5 | 0,04 | 1 mal pro Tag | Bewässerung |
| Freiland | Kartoffeln | 300 | 6,8 | 6,0 | 2 mal pro Jahr | Blattspritzung |
| | Hülsenfrüchtler | 600 | 13,5 | 12,0 | 2 mal pro Jahr | |
| | Kohlgewächse | 600 | 13,5 | 12,0 | 1 mal bei 3-BlattStadium | |
| | Salat | | | | | |
| | Getreide | 200 | 4,5 | 4,0 | beim Aufstellen | |
| | Liliengewächse | 600 | 13,5 | 12,0 | bei Pflanzenhöhe 15 cm | |
| | Rasen | 1000 | 22,5 | 20,0 | alle 4 Wochen | |
| | Rosen | 20 | 0,5 | 0,04 | 1 mal pro Tag | Bewässerung |
| | Schnittblumen | 300 | 6,8 | 6,0 | 2 mal pro Jahr | Blattspritzung |
| Gewächshaus | Erdbeeren | 20 | 0,5 | 0,04 | 1 mal pro Tag | Bewässerung |
| | Himbeeren | | | | | |
| | Gurken | | | | | |
| | Tomaten | | | | | |
| | Zucchini | | | | | |

## Patentansprüche

1. Metallnanopartikelhaltiges, wässriges Düngemittel enthaltend zumindest zwei Arten von Metallnanopartikel, wobei die Metallnanopartikel eine Partikelgröße von 0,1 nm bis 10.000 nm aufweisen, und wobei die Metallnanopartikel, bezogen auf das Gewicht des gesamten wässrigen Düngemittels, in einem Anteil von 0,1 Gew.% bis 20 Gew.% in dem wässrigen Düngemittel enthalten sind, **dadurch gekennzeichnet, dass** das wässrige Düngemittel, bezogen auf das Gewicht des gesamten wässrigen Düngemittels, Kupfernanopartikel in einem Anteil von 2 Gew.% bis 4 Gew.% und Silbernanopartikel in einem Anteil von 0,001 Gew.% bis 0,1 Gew.% enthält.

2. Metallnanopartikelhaltiges, wässriges Düngemittel nach Anspruch 1, **dadurch gekennzeichnet, dass** die Metallnanopartikel, bezogen auf das Gewicht des gesamten wässrigen Düngemittels, in einem Anteil von 0,1 Gew.% bis 5 Gew.%, bevorzugt in einem Anteil von 0,1 Gew.% bis 3 Gew.% enthalten sind oder die Metallnanopartikel, bezogen auf das Gewicht des gesamten wässrigen Düngemittels, in einem Anteil von 3 Gew.% bis 20 Gew.%, bevorzugt in einem Anteil von 3 Gew.% bis 5 Gew.% enthalten sind.

3. Metallnanopartikelhaltiges, wässriges Düngemittel nach einem der Ansprüche 1 oder 2, **dadurch gekennzeichnet, dass** das wässrige Düngemittel einen Anteil an Kalium und einen Anteil an Stickstoff enthält, wobei das wässrige Düngemittel, bezogen auf das Gewicht des gesamten wässrigen Düngemittels, Kalium bevorzugt in Form von K₂O in einem Anteil von 4 Gew.% bis 15 Gew.% und Stickstoff bevorzugt in einem Anteil von 6 Gew.% bis 10 Gew.% enthält.

4. Metallnanopartikelhaltiges, wässriges Düngemittel nach einem der Ansprüche 1 bis 3, **dadurch gekennzeichnet, dass** ein oder mehrere weitere Arten von Metallnanopartikel enthalten sind, wobei die weiteren Arten von Metallnanopartikel ausgewählt sind aus der Gruppe bestehend aus Eisennanopartikel, Zinknanopartikel, Siliziumnanopartikel, Mangannanopartikel, Molybdännanopartikel, Calciumnanopartikel und Magnesiumnanopartikel, wobei bevorzugt Eisennanopartikel enthalten sind.

5. Metallnanopartikelhaltiges, wässriges Düngemittel nach einem der Ansprüche 1 bis 4, **dadurch gekennzeichnet, dass** das wässrige Düngemittel, bezogen auf das Gewicht des gesamten wässrigen Düngemittels, Eisennanopartikel in einem Anteil von 0,1 Gew.% bis 4 Gew.%, bevorzugt in einem Anteil von 1 Gew.% bis 3 Gew.%, besonders bevorzugt in einem Anteil von rund 2 Gew.% enthält.

6. Metallnanopartikelhaltiges, wässriges Düngemittel nach einem der Ansprüche 1 bis 5, **dadurch gekennzeichnet, dass** das wässrige Düngemittel, bezogen auf das Gewicht des gesamten wässrigen Düngemittels, Kupfernanopartikel in einem Anteil von rund 3 Gew.% enthält.

7. Metallnanopartikelhaltiges, wässriges Düngemittel nach einem der Ansprüche 1 bis 6, **dadurch gekennzeichnet, dass** das wässrige Düngemittel, bezogen auf das Gewicht des gesamten wässrigen Düngemittels, Silbernanopartikel in einem Anteil von rund 0,01 Gew.% enthält.

8. Metallnanopartikelhaltiges, wässriges Düngemittel nach einem der Ansprüche 1 bis 7, **dadurch gekennzeichnet, dass** das wässrige Düngemittel Eisennanopartikel, Kupfernanopartikel und Silbernanopartikel enthält, wobei das wässrige Düngemittel, bezogen auf das Gewicht des gesamten wässrigen Düngemittels, bevorzugt Eisennanopartikel in einem Anteil von 1 Gew.% bis 3 Gew.%, besonders bevorzugt in einem Anteil von rund 2 Gew.%, bevorzugt Kupfernanopartikel in einem Anteil von rund 3 Gew.%, und bevorzugt Silbernanopartikel in einem Anteil von rund 0,01 Gew.% enthält.

9. Verfahren zum Ausbringen eines metallnanopartikelhaltigen, wässrigen Düngemittels gemäß einem der Ansprüche 1 bis 8, wobei das Ausbringen durch Blattspritzung, Fontänenbewässerung, Tropfbewässerung oder mit Gießwagen erfolgt.

10. Verwendung eines metallnanopartikelhaltigen, wässrigen Düngemittels nach einem der Ansprüche 1 bis 8 zur Düngung von Tomaten-Pflanzen, Clementinen-Pflanzen, Himbeer-Pflanzen, Citrusfrucht-Pflanzen, Kernobst-Pflanzen, Steinobst-Pflanzen, Mango-Pflanzen, Guava-Pflanzen, Erdbeer-Pflanzen, Auberginen-Pflanzen, Kartoffel-Pflanzen, Hülsenfrucht-Pflanzen, Kohlgewächsen, Salat-Pflanzen, Getreide, Liliengewächsen, Rasen, Rosen, Schnittblumen, Gurken, Zucchini.

## Claims

1. An aqueous fertiliser containing metal nanoparticles, which contains at least two types of metal nanoparticles, wherein the metal nanoparticles have a particle size of from 0.1 nm to 10,000 nm, and wherein the metal nanoparticles, in relation to the weight of the total aqueous fertiliser, are contained in the aqueous fertiliser in a proportion of from 0.1 % by weight to 20 % by weight, **characterised in that** the aqueous fertiliser, in relation to the weight of the total aqueous fertiliser, contains copper nanoparticles in a proportion of from 2 % by weight to 4 % by weight and silver nanoparticles in a proportion of from 0.001 % by weight to 0.1 % by weight.

2. The aqueous fertiliser containing metal nanoparticles according to claim 1, **characterised in that** the metal nanoparticles, in relation to the weight of the total aqueous fertiliser, are contained in a proportion of from 0.1 % by weight to 5 % by weight, preferably in a proportion of from 0.1 % by weight to 3 % by weight, or the metal nanoparticles, in relation to the weight of the total aqueous fertiliser, are contained in a proportion of from 3 % by weight to 20 % by weight, preferably in a proportion of from 3 % by weight to 5 % by weight.

3. The aqueous fertiliser containing metal nanoparticles according to one of claims 1 or 2, **characterised in that** the aqueous fertiliser contains a proportion of potassium and a proportion of nitrogen, wherein the aqueous fertiliser, in relation to the weight of the total aqueous fertiliser, contains potassium preferably in the form of K₂O in a proportion of from 4 % by weight to 15 % by weight and nitrogen preferably in a proportion of from 6 % by weight to 10 % by weight.

4. The aqueous fertiliser containing metal nanoparticles according to any one of claims 1 to 3, **characterised in that** one or more further types of metal nanoparticles are contained, wherein the further types of metal nanoparticles are selected from the group consisting of iron nanoparticles, zinc nanoparticles, silicon nanoparticles, manganese nanoparticles, molybdenum nanoparticles, calcium nanoparticles and magnesium nanoparticles, wherein iron nanoparticles are preferably contained.

5. The aqueous fertiliser containing metal nanoparticles according to any one of claims 1 to 4, **characterised in that** the aqueous fertiliser, in relation to the weight of the total aqueous fertiliser, contains iron nanoparticles in a proportion of from 0.1 % by weight to 4 % by weight, preferably in a proportion of from 1 % by weight to 3 % by weight, particularly preferably in a proportion of approximately 2 % by weight.

6. The aqueous fertiliser containing metal nanoparticles according to any one of claims 1 to 5, **characterised in that** the aqueous fertiliser, in relation to the weight of the total aqueous fertiliser, contains copper nanoparticles in a proportion of approximately 3 % by weight.

7. The aqueous fertiliser containing metal nanoparticles according to any one of claims 1 to 6, **characterised in that** the aqueous fertiliser, in relation to the weight of the total aqueous fertiliser, contains silver nanoparticles in a proportion of approximately 0.01 % by weight.

8. The aqueous fertiliser containing metal nanoparticles according to any one of claims 1 to 7, **characterised in that** the aqueous fertiliser contains iron nanoparticles, copper nanoparticles and silver nanoparticles, wherein the aqueous fertiliser, in relation to the weight of the total aqueous fertiliser, preferably contains iron nanoparticles in a proportion of from 1 % by weight to 3 % by weight, particularly preferably in a proportion of approximately 2 % by weight, preferably copper nanoparticles in a proportion of approximately 3 % by weight, and preferably silver nanoparticles in a proportion of approximately 0.01 % by weight.

9. A method for spreading an aqueous fertiliser containing metal nanoparticles according to any one of claims 1 to 8, wherein the fertiliser is spread by spraying, fountain irrigation, drip irrigation or by using irrigation booms.

10. Use of an aqueous fertiliser containing metal nanoparticles according to any one of claims 1 to 8 for fertilising tomato plants, clementine plants, raspberry plants, citrus fruit plants, pome fruit plants, stone fruit plants, mango plants, guava plants, strawberry plants, aubergine plants, potato plants, legume plants, brassicas, salad plants, grains, plants from the lily family, grass, roses, cut flowers, cucumbers, zucchini.

## Revendications

1. Fertilisant aqueux, contenant des nanoparticules métalliques, qui contient au moins deux types de nanoparticules métalliques, les nanoparticules métalliques présentant une taille de particules de 0,1 nm à 10.000 nm et les nanoparticules métalliques, étant contenues dans la fertilisant aqueux dans une part de 0,1 % en poids à 20 % en poids en rapport au poids de l'ensemble du fertilisant aqueux, **caractérisé en ce que** le fertilisant aqueux contient des nanoparticules de cuivre dans une part de 2 % en poids à 4 % en poids et des nanoparticules d'argent dans une part de 0,001 % en poids à 0,1 % en poids, en rapport au poids de l'ensemble du fertilisant aqueux.

2. Fertilisant aqueux, contenant des nanoparticules métalliques selon la revendication 1, **caractérisé en ce que** les nanoparticules métalliques sont contenues dans une part de 0,1 % en poids à 5 % en poids, de préférence, dans une part de 0,1 % en poids à 3 % en poids en rapport au poids de l'ensemble du fertilisant aqueux, ou **en ce que** les nanoparticules métalliques, sont contenues dans une part de 3 % en poids à 20 % en poids, de préférence dans une part de 3 % en poids à 5 % en poids en rapport au poids de l'ensemble du fertilisant aqueux.

3. Fertilisant aqueux, contenant des nanoparticules métalliques selon l'une quelconque des revendications 1 ou 2, **caractérisé en ce que** le fertilisant aqueux contient une part de potassium et une part d'azote, le fertilisant aqueux contenant du potassium de préférence sous la forme de K₂O dans une part de 4 % en poids à 15 % en poids et de l'azote de préférence dans une part de 6 % en poids à 10 % en poids en rapport au poids de l'ensemble du fertilisant aqueux.

4. Fertilisant aqueux, contenant des nanoparticules métalliques selon l'une quelconque des revendications 1 à 3, **caractérisé en ce qu'**il contient un ou plusieurs types supplémentaires de nanoparticules métalliques, les types supplémentaires de nanoparticules métalliques étant choisis dans le groupe composé des nanoparticules de fer, des nanoparticules de zinc, des nanoparticules de silicium, des nanoparticules de manganèse, des nanoparticules de molybdène, des nanoparticules de calcium et des nanoparticules de magnésium, étant contenues de préférence des nanoparticules de fer.

5. Fertilisant aqueux, contenant des nanoparticules métalliques selon l'une quelconque des revendications 1 à 4, **caractérisé en ce que** le fertilisant aqueux, contient des nanoparticules de fer dans une part de 0,1 % en poids à 4 % en poids, de préférence dans une part de 1 % en poids à 3 % en poids, de manière particulièrement préférentielle, dans une part de près de 2 % en poids en rapport au poids de l'ensemble du fertilisant aqueux.

6. Fertilisant aqueux, contenant des nanoparticules métalliques selon l'une quelconque des revendications 1 à 5, **caractérisé en ce que** le fertilisant aqueux contient des nanoparticules de cuivre dans une part de près de 3 % en poids en rapport au poids de l'ensemble du fertilisant aqueux.

7. Fertilisant aqueux, contenant des nanoparticules métalliques selon l'une quelconque des revendications 1 à 6, **caractérisé en ce que** le fertilisant aqueux, contient des nanoparticules d'argent dans une part de près de 0,01 % en poids en rapport au poids de l'ensemble du fertilisant aqueux.

8. Fertilisant aqueux, contenant des nanoparticules métalliques selon l'une quelconque des revendications 1 à 7, **caractérisé en ce que** le fertilisant aqueux contient des nanoparticules de fer, des nanoparticules de cuivre et des nanoparticules d'argent, le fertilisant aqueux contenant de préférence des nanoparticules de fer dans une part de 1 % en poids à 3 % en poids, de manière particulièrement préférentielle, dans une part de près de 2 % en poids, de préférence des nanoparticules de cuivre dans une part de près de 3 % en poids et de préférence des nanoparticules d'argent dans une part de près de 0,01 % en poids en rapport au poids de l'ensemble du fertilisant aqueux.

9. Procédé, destiné à épandre un fertilisant aqueux contenant des nanoparticules métalliques selon l'une quelconque des revendications 1 à 8, l'épandage s'effectuant par pulvérisation des feuilles, par arrosage en fontaine, par arrosage au goutte à goutte ou à l'aide d'un chariot d'arrosage.

10. Utilisation d'un fertilisant aqueux contenant des nanoparticules métalliques selon l'une quelconque des revendications 1 à 8 pour fertiliser des plants de tomates, des plants de clémentines, des plants de framboisiers, des plants de agrumes, des plants de fruits à pépin, des plants de fruits à noyau, des plants de manguiers, des plants de goyaves, des plants de fraisiers, des plants d'aubergines, des plants de pommes de terre, des plants de légumineuses, des choux, des plants de salades, des céréales, des liliacées, du gazon, des roses, fleurs coupées, des cucurbitacées, des courgettes.
